# EUROPÄISCHE PATENTSCHRIFT

(11) **EP 2 766 631 B1**
(45) Veröffentlichungstag und Bekanntmachung des Hinweises auf die Patenterteilung: **05.06.2019**
(21) Anmeldenummer: 12759045.3
(22) Anmeldetag: 29.08.2012
(51) Int. Cl.: B60G 11/27, F16F 9/05

(54) **ABROLLKOLBEN FÜR EINEN LUFTFEDERROLLBALG**
ROLLING PISTON FOR AN AIR SPRING U-TYPE BELLOWS
PISTON ROULANT POUR UN SOUFFLET À RESSORT PNEUMATIQUE

(30) Priorität: 10.10.2011 DE 102011054330
(43) Veröffentlichungstag der Anmeldung: 20.08.2014
(73) Patentinhaber: ContiTech Luftfedersysteme GmbH, 30165 Hannover (DE)
(72) Erfinder: ZEC, Djuradj, 30457 Hannover (DE); BALACHONZEW, Boris, 30823 Garbsen (DE)
(74) Vertreter: Kilsch, Armin Ralph
(86) Internationale Anmeldenummer: PCT/EP2012/066727
(87) Internationale Veröffentlichungsnummer: WO 2013/053536

(56) Entgegenhaltungen:
- EP-A2- 1 450 066
- WO-A1-01/42678
- WO-A1-2008/097960
- DE-A1- 4 213 676
- DE-B3-102005 026 314

## Beschreibung

Die Erfindung betrifft einen Abrollkolben aus Kunststoff für einen Luftfederrollbalg, wobei der Abrollkolben als Tauchkolben ausgebildet ist und eine vorzugsweise zentrisch angeordnete Stütze für einen in Achsrichtung der Luftfeder wirkenden Anschlagpuffer aufweist.

Im Stand der Technik sind verschiedene Arten solcher Abrollkolben bekannt. Einerseits existieren relativ schwere Abrollkolben aus Stahlblech mit voll nutzbarem Innenvolumen und mit einem Endanschlag, d.h. einer so genannten Pufferstütze, nämlich einer Stütze für einen im Wesentlichen in Achsrichtung der Luftfeder wirkenden Anschlagpuffer. Der Abrollkolben aus Stahlblech wird als Tiefziehteil mit Konus-Dichtsitz für die Balgaufnahme hergestellt und weist ein eingeschweißtes Bodenteil mit aufgeschweißtem Stützrohr auf. Ein solcher Kolben mit Pufferstütze aus Stahlblech ist zwar ausreichend stabil, um auch höhere Belastungen oder gar für den Notlauf ein Aufsetzen der Karosserie aufzufangen, jedoch ist das gesamte Bauteil entsprechend schwer und in der Herstellung teuer.

Andererseits existieren relativ leichte einteilige Kunststoffkolben, wie z.B. aus der WO 2008/097960 A1 bekannt. Solche Kunststoffkolben werden aus Gründen der Gewichtsersparnis mittlerweile auch bei den Herstellern von LKW bevorzugt. In Bezug auf die Tragkraft der Pufferstütze können jedoch selbst aus glasfaserverstärktem Kunststoff hergestellte Kolben die Festigkeitswerte, Dauerfestigkeitswerte und die Temperaturbeständigkeit von Pufferstützen bei Stahlkolben kaum erreichen. Darüberhinaus wird aus eben diesen Gründen bei Kunststoffkolben das Innenvolumen nicht oder nur teilweise genutzt. Bei nicht oder nur teilweise genutztem Innenvolumen weisen solche Konstruktionen aber als Nachteil eine Komforteinbuße auf. Die Federung ist dann relativ hart.

Die Alternative im Stand der Technik sind dann zweiteiliger Kunststoffkolben mit nutzbarem Innenvolumen, aber ohne Pufferstütze, bei denen dann die Gesamtkonstruktion des Fahrwerks so umgestaltet werden muss, dass die fehlende Pufferstütze durch andere Maßnahmen ersetzt wird. Einen solchen Luftfederkolben offenbart z. B. die EP 1 862 335 B1. Dort besteht der Luftfederkolben aus einem becherförmigen Teil und einem Abdeckteil, welche im Bereich ihrer Wandungen stumpf verschweißt werden. Das becherförmigen Teil weist dabei eine Grundwand auf, die einen Einsatz zur Verbindung mit der Fahrzeugachse aufweist. Nachteilig hierbei ist, wie dargestellt, der fehlende Endanschlag (Pufferstütze).

Auch die DE 10 2007 035 640 A1 offenbart einen als Hohlkörper ausgebildeten Tauchkolben für eine Luftfeder, der aus zwei luftdicht miteinander verbundenen Teilen besteht, nämlich aus einem topfförmigen Unterteil mit Boden und Mantel und aus einem Oberteil. Auch hier ist kein Endanschlag vorgesehen.

Der Erfindung lag also die Aufgabe zu Grunde einen leichten und einfach herzustellenden Abrollkolbenkolben herzustellen, dessen Innenvolumen vollständig für die Federung nutzbar ist und bei dem auch ein Endanschlag/eine Pufferstütze integriert ist, d.h., bei dem eine Kombination von optimalem Luftvolumen und Komfort und die Bereitstellung eines integrierten Endanschlages im Luftfedersystem gelingt.

Gelöst wird diese Aufgabe durch die Merkmale des Hauptanspruchs. Weitere vorteilhafte Ausbildungen sind in den Unteransprüchen offenbart.

Dabei besteht die Stütze aus einem Material, welches im Vergleich zum Kunststoff des Abrollkolbens eine wesentlich höhere Festigkeit aufweist, d.h. auch eine wesentlich höhere Warmfestigkeit bzw. Temperaturbeständigkeit. Die Stütze ist dazu modular in einer komplementär zur Stützenform ausgebildete Ausnehmung des Abrollkolbens aufnehmbar, bzw. einsteckbar und ist mit oder in dieser Ausnehmung form- und/oder reibschlüssig verbindbar. Vorzugsweise besteht die Stütze aus Stahl oder einem anderen geeigneten Metall.

Dadurch kombiniert man den Vorteil einer Leichtbauweise (Kunststoffkolben) mit den Anforderungen an eine möglichst belastbare und über die Lebensdauer gleichmäßig tragfähige Pufferstütze.

Die erfindungsgemäße Ausbildung besteht darin, dass der Abrollkolben als hohler Tauchkolben ausgebildet ist, der aus einem topfförmigen Kolbenunterteil und aus einem mit dem Kolbenunterteil luftdicht verbundenem und als Deckel ausgebildetem Kolbenoberteil besteht und dessen Innenraum mit dem Innenraum der Luftfeder in Verbindung steht und der folgende weitere Merkmale aufweist: ein Teil der komplementär zur Stützenform ausgebildete Ausnehmung ist als Teil des Kolbenoberteils und ausgehend von dessen Deckel ausgebildet, während der andere Teil der Ausnehmung als Teil des topfförmigen Kolbenunterteils und ausgehend von dessen Boden ausgebildet ist, wobei beide Ausnehmungsteile aneinander anschließen und zur Aufnahme der Stütze zusammenwirken.

Dadurch, dass ein Teil der Ausnehmung als Teil des Kolbenoberteils und der andere Teil der Ausnehmung als Teil des topfförmigen Kolbenunterteils und ausgehend von dessen Boden ausgebildet ist, wobei beide Ausnehmungsteile mit der Stütze bei den üblichen Einbausituationen zur Aufnahme von im Wesentlichen axial wirkenden Kräften zusammenwirken, entsteht ein zweiteiliger Kunststoffkolben, dessen Oberteil einen integriertem Dichtkonus für Luftfederbalg aufweisen kann und der bei luftdichter Verbindung von Oberteil und Unterteil ein nutzbares Innenvolumen sowie eine außerordentlich leicht bauende Konstruktion mit sehr guten Festigkeitseigenschaften ausbildet.

Eine weitere vorteilhafte Ausbildung besteht darin, dass die Stütze und die Ausnehmung zylindrisch oder rohrförmig komplementär ausgebildet und zentrisch innerhalb des Abrollkolbens angeordnet sind. Kurze Rohre sind auch in Längsrichtung enorm tragfähig und trotzdem als Hohlkörper sehr leicht.

Eine weitere vorteilhafte Ausbildung besteht darin, dass der Innenraum der Abrollkolbens mit rippenartigen Versteifungselementen ausgesteift ist. Damit lassen sich auch Querkräfte oder schräg einwirkende Pufferkräfte problemlos auffangen. Auch lässt sich mit einer solchen Ausbildung die Wandstärke der rohrförmigen Stützenteile ggf. weiter reduzieren. Dieser Effekt wird noch dadurch erhöht, dass die rippenartigen Versteifungselemente sternförmig oder strahlenförmig angeordnet sind und dass rippenartige Versteifungselemente auch in den Ringräumen zwischen dem jeweiligen Stützenteil und Kolbenwandung oder Deckelwandung vorgesehen sind.

Eine weitere vorteilhafte Ausbildung besteht darin, dass die luftdichte Verbindung zwischen Kolbenunterteil und Kolbenoberteil am äußeren Kolbenmantel ausgeführt ist, während die Ausnehmungsteile lediglich aneinander anliegen. Zum einen ergibt sich dadurch eine definierte statisch bestimmte Kraftaufnahme ohne die typischen und für Kunststoffmaterialien bei Dauerbelastung oft schädlichen Verspannungen innerhalb des Bauteils. Zum anderen ist dies vorteilhaft bei der bei konzentrischen Kunststoffteilen oft üblichen Rotations-Reibschweißung. Wenn nämlich eine solche Verbindung nur an dem äußeren Kolbenmantel ausgeführt wird, sind die durch unterschiedliche Umfangsgeschwindigkeiten bei der Rotationsverschweißung unterschiedlicher Durchmesser auftretenden Probleme nicht mehr vorhanden.

Natürlich können auch andere Verbindungsarten genutzt werden, etwa mit Dichtungen versehen Schraub-, Klemm-, Rast- oder Quetschverbindungen. Letztere sind allerdings oft teurer und bei der Montage umständlicher zu handhaben, so dass sich gerade bei Kunststoff die leicht herzustellende Stumpfverschweißung durch Reibschweißen anbietet. Man erhält so auf einfache Weise ohne umfangreiche Montagevorrichtungen eine luftdichte Verbindung von Oberteil und Unterteil zur Bildung des Innenvolumens.

Eine weitere vorteilhafte Ausbildung besteht darin, dass zwischen dem zum Kolbenunterteil gehörigen Teil der Ausnehmung und der Stütze eine Dichtung angeordnet ist. Mit einer solch einfachen Konstruktion, bei der vorzugsweise ein O-Ring als Dichtung verwendet wird, erhält man ohne viel Aufwand einen luftdichten Abschluss des Kolbeninnenraums.

Eine weitere vorteilhafte Ausbildung besteht darin, dass die Stütze im Wesentlichen rohrförmig und mit Absätzen oder Flanschen zur Positionierung in der Ausnehmung ausgebildet ist und in ihrem unteren Bereich einen mit Gewinde versehenen Einsatz aufweist.

Eine weitere vorteilhafte Ausbildung besteht darin, dass die Verbindung des Kolbenunterteils mit dem Fahrwerk über die Stütze bzw. über den mit Gewinde versehenen Einsatz erfolgt. Damit dient die in der Aufnahme bzw. in den Aufnahmeteilen eingepasste Stütze gleichzeitig als Verbindungselement zum Anschluss des Abrollkolbens an Fahrwerk oder Karosserie. Dies vereinfacht und erleichtert wiederum die Konstruktion und erlaubt auch eine Sicherung gegen "Abheben" des Abrollkolbens.

Der Einsatz kann dabei als in die Stütze eingepresste metallische Gewindebuchse oder als eingepresster oder eingeschraubter metallischer Gewindebolzen ausgebildet sein. Natürlich ist es ebenfalls möglich, ggf. additiv, dass die Stütze ihrerseits auf ihrer Unterseite mit Aufnahmen oder konkaven bzw. domförmigen Rücksprüngen versehen ist, evtl. ausgebildet in einem auf der Unterseite der Stütze angeschlossenen und zur Verbindung mit dem Fahrwerk vorgesehenem Flansch oder Boden. Das ermöglicht die Übertragung von Druck- und Querkräften ohne weitere Elemente und erzeugt bei entsprechender Ausbildung eine ringförmige Kraftübertragungsfläche, die in Zusammenwirken mit einem zentrisch im Bereich des Stützenteiles angeordneten Gegenstück des Fahrwerks auch zur Aufnahme von Kipp-Momenten quer zur Achse geeignet ist. Weiterhin dient eine solche Ausführung auch zur Zentrierung bei der Montage.

Eine weitere vorteilhafte Ausbildung besteht darin, dass die Stütze balgseitig mit einem Teller zur Aufnahme des Anschlagpuffers versehen ist. Damit vereinfacht sich der Montage- oder Konstruktionsaufwand für den Luftfederdeckel bzw. die obere Luftfederplatte und die Stütze kann mit dem Anschlagpuffer als ein(teiliges) Bauteil zugeliefert werden (Reduktion der Einzelteile). Natürlich kann der Anschlagpuffer auch, wie bisher bei ähnlichen Konstruktionen im Stand der Technik üblich, auf der Innenseite des Luftfederdeckels angeordnet werden, so dass der Puffer einem ggf. tellerförmig an der Oberseite der Stütze ausgebildeten Anschlagflansch gegenüberliegt.

Besonders vorteilhaft lässt sich der erfindungsgemäße Abrollkolben bei einer Luftfedereinrichtung für ein Fahrzeug verwenden. Auch lässt sich der erfindungsgemäße Abrollkolben innerhalb eines so genannten "Luftfedermoduls" verwenden, welches auch Luftfederbalg und Dämpfer beinhaltet und einbaufertig zugeliefert wird.

Anhand eines Ausführungsbeispieles soll die Erfindung näher erläutert werden. Es zeigen
- Fig. 1: einen erfindungsgemäßen Abrollkolben für eine Luftfeder
- Fig. 2: denerfindungsgemäßen Abrollkolbens gemäß Fig.1 in Form einer Explosionszeichnung
- Fig. 3: einen Teilzusammenbau einer Federung mit einem erfindungsgemäßen Abrollkolben nach Fig. 1

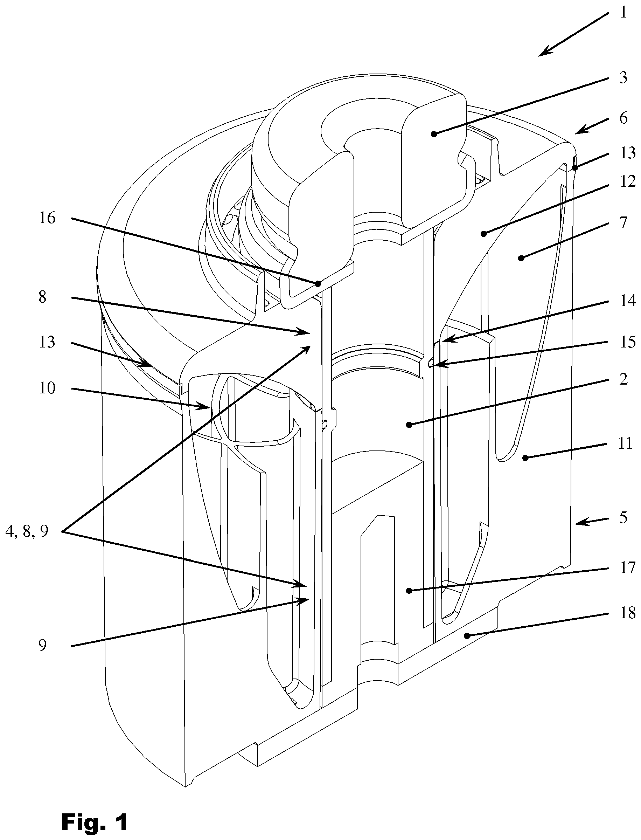

Fig. 1 zeigt einen als hohlen Tauchkolben ausgebildeten erfindungsgemäßen Abrollkolben 1 für einen Luftfederrollbalg eines LKW, der eine zentrisch angeordnete Stütze 2 für einen in Achsrichtung der Luftfeder wirkenden Anschlagpuffer 3 aufweist und bei dem dass die Stütze 2 aus Stahl besteht, welcher im Vergleich zum Kunststoff des Abrollkolbens eine wesentlich höhere Festigkeit aufweist. Die Stütze ist in einer komplementär zur Stützenform ausgebildete Ausnehmung 4 des Abrollkolbens 1 aufgenommen und mit letzterem verbunden.

Der Abrollkolben besteht in dieser Ausführung aus einem topfförmigen Kolbenunterteil 5 und aus einem mit dem Kolbenunterteil 5 luftdicht verbundenem und als Deckel ausgebildetem Kolbenoberteil 6. Der Innenraum 7 des Abrollkolbens 1 steht mit dem Innenraum der Luftfeder bzw. des Luftfederrollbalgs 19 in Verbindung.

Ein Teil 8 der komplementär zur Stützenform ausgebildete Ausnehmung 4 ist als Teil des Kolbenoberteils 6 und ausgehend von dessen Deckel ausgebildet, während ein anderer Teil 9 der Ausnehmung 4 als Teil des topfförmigen Kolbenunterteils 5 und ausgehend von dessen Boden ausgebildet ist. Beide Ausnehmungsteile 8 und 9 schließen aneinander an und wirken zusammen zur Aufnahme der Stütze 2.

Die Stütze 2 und die Ausnehmung 4 bzw. die Ausnehmungsteile 8 und 9 sind rohrförmig komplementär ausgebildet und zentrisch innerhalb des Abrollkolbens 1 angeordnet.

Der Innenraum der Abrollkolbens 1 ist mit rippenartigen Versteifungselementen 10, 11 und 12 ausgesteift, entsprechend angeordnet im Wesentlichen stern- und/oder strahlenförmig in den Ringräumen zwischen dem jeweiligen Ausnehmungsteil 8 oder 9 und der Kolbenwandung oder Deckelwandung.

Zwischen Kolbenunterteil und Kolbenoberteil ist am äußeren Kolbenmantel die luftdichte Verbindung 13 ausgeführt, während die rohrförmigen Ausnehmungsteile lediglich auf Stoß aneinander anliegen, hier im innen liegenden Verbindungsbereich 14.

Bedingt durch dieses "Aneinanderliegen" ist eine Dichtung erforderlich. Bei der hier gezeigten Ausführung ist diese Dichtung als O-Ring 15 ausgebildet und auf sehr einfache Weise zwischen dem zum Kolbenunterteil 5 gehörigen Teil der Ausnehmung 9 und der Stütze 2 angeordnet.

Auch die Stütze 2 ist hier im Wesentlichen rohrförmig ausgebildet und balgseitig mit einem tellerförmigen Flansch 16 versehen, der sowohl der vertikalen Positionierung der Stütze 2 dient als auch zur Aufnahme des Anschlagpuffers 3 vorgesehen ist.

In ihrem unteren Bereich weist die Stütze 2 einen mit Gewinde versehenen Einsatz 17 auf, über den mit einer Schraube oder einem Gewindebolzen, hier nicht näher dargestellt, die Verbindung des Kolbenunterteils 5 mit dem Fahrwerk erfolgt, in diesem Fall unter Verwendung einer entsprechend gelochten Scheibe 18 aus Metall, die der gleichmäßigen Verteilung der Fahrwerkskräfte auf den Boden des Kolbenunterteils 5 dient.

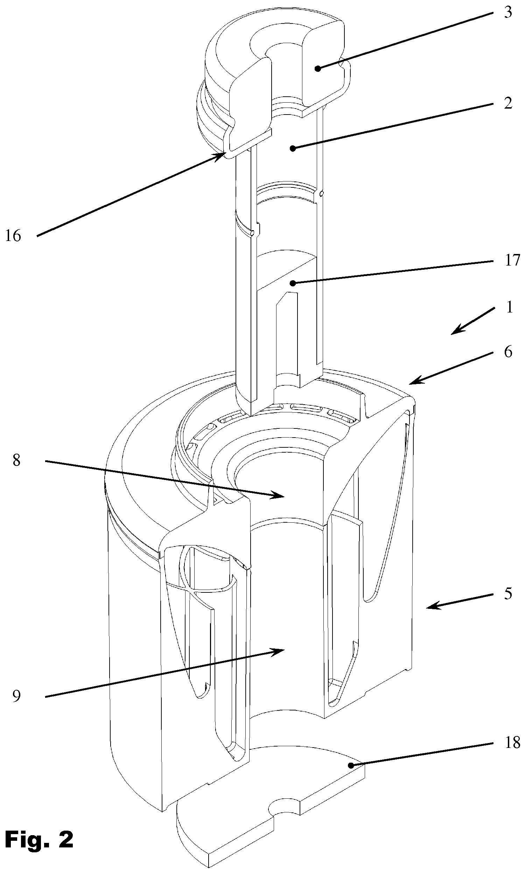

Fig. 2 zeigt den erfindungsgemäßen Abrollkolbens 1 in Form einer Explosionszeichnung, bei der alle wesentlichen Teile herausgezogen sind.

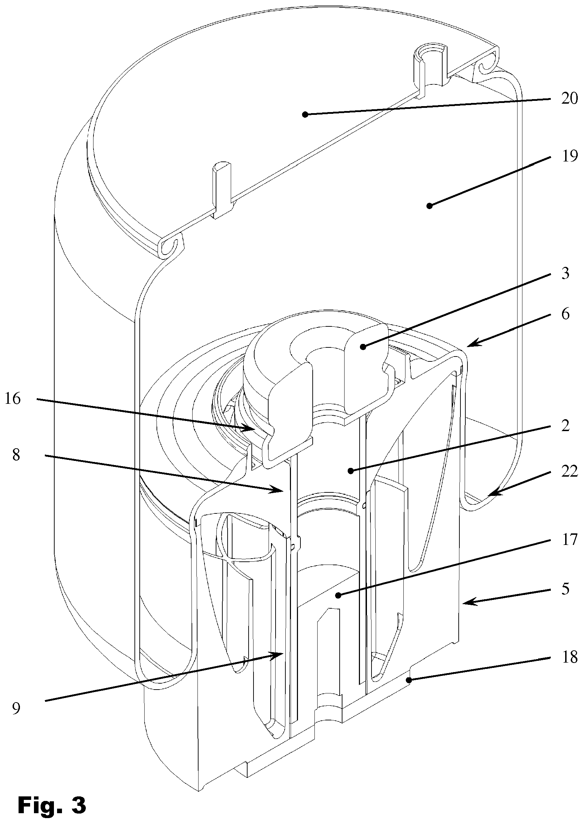

Fig. 3 zeigt einen Teilzusammenbau einer Federung für eine Luftfedereinrichtung für ein Fahrzeug mit einem Abrollkolben 1 gemäß Fig. 1, dem zugehörigen Luftfederrollbalg 19 und dem mit Luftzufuhreinrichtungen versehenen Luftfederdeckel 20.

An das Kolbenoberteil 6 ist der Luftfederrollbalg 19 luftdicht an den als Tauchkolben ausgebildeten Abrollkolben 1 angeschlossen und rollt beim Ein- und Ausfedern unter Bildung einer Rollfalte 21 am Außenumfang bzw. an der Kolbenwandung des Abrollkolbens 1 ab.

Dabei ist der Luftfederdeckel 20 mit einer hier nicht näher dargestellten Karosserie und der Einsatz 18 über einen hier nicht dargestellten Gewindebolzen mit einem zugehörigen Fahrwerksteil/Achsschemel des LKW verbunden.

### Bezugszeichenliste

### (Teil der Beschreibung)

- 1: Abrollkolben
- 2: Stütze
- 3: Anschlagpuffer
- 4: Ausnehmung
- 5: Kolbenunterteil
- 6: Kolbenoberteil
- 7: Innenraum des Abrollkolbens
- 8: Ausnehmungsteil
- 9: Ausnehmungsteil
- 10: Versteifungselement
- 11: Versteifungselement
- 12: Versteifungselement
- 13: Verbindung
- 14: Innen liegender Verbindungsbereich
- 15: O-Ring
- 16: Tellerförmiger Flansch
- 17: Einsatz
- 18: Gelochte Scheibe
- 19: Luftfederrollbalg
- 20: Luftfederdeckel
- 21: Rollfalte

## Patentansprüche

1. Abrollkolben (1) aus Kunststoff für einen Luftfederrollbalg, wobei der Abrollkolben als Tauchkolben ausgebildet ist und eine vorzugsweise zentrisch angeordnete Stütze (2) für einen in Achsrichtung der Luftfeder wirkenden Anschlagpuffer (3) aufweist, wobei
- die Stütze (2) aus einem Material besteht, welches im Vergleich zum Kunststoff des Abrollkolbens (1) eine wesentlich höhere Festigkeit aufweist, vorzugsweise aus Stahl und wobei
- die Stütze (2) in einer komplementär zur Stützenform ausgebildete Ausnehmung (4, 8, 9) des Abrollkolbens (1) aufnehmbar und mit letzterem verbindbar ist **dadurch gekennzeichnet, dass** der Tauchkolben hohl ausgebildet ist und aus einem topfförmigen Kolbenunterteil (5) und ein mit dem Kolbenunterteil luftdicht verbundenem und als Deckel ausgebildetem Kolbenoberteil (6) besteht und dessen Innenraum (7) mit dem Innenraum der Luftfeder in Verbindung steht, mit folgenden Merkmalen:
- ein Teil (8) der komplementär zur Stützenform ausgebildete Ausnehmung (4) ist als Teil des Kolbenoberteils (6) und sich in Richtung des Kolbenunterteils erstreckend ausgebildet,
- der andere Teil (9) der Ausnehmung (4) ist als Teil des topfförmigen Kolbenunterteils (5) und ausgehend von dessen Boden sich in Richtung des Kolbenoberteils erstreckend ausgebildet,
wobei beide Ausnehmungsteile (8,9) aneinander anschließen und zur Aufnahme der Stütze (2) zusammenwirken.

2. Abrollkolben nach Anspruch 1, bei dem die Stütze (2) und die Ausnehmung (4, 8, 9) zylindrisch oder rohrförmig komplementär ausgebildet und zentrisch innerhalb des Abrollkolbens (1) angeordnet sind.

3. Abrollkolben nach Anspruch 2, bei dem der Innenraum der Abrollkolbens mit rippenartigen Versteifungselementen (10, 11 ,12) ausgesteift ist.

4. Abrollkolben nach einem der Ansprüche 1 bis 3, bei dem die luftdichte Verbindung (13) zwischen Kolbenunterteil (5) und Kolbenoberteil (6) am äußeren Kolbenmantel ausgeführt ist, während die Ausnehmungsteile lediglich aneinander anliegen (14).

5. Abrollkolben nach Anspruch 4, bei dem zwischen dem zum Kolbenunterteil (5) gehörigen Teil der Ausnehmung (9) und der Stütze (2) eine Dichtung (15) angeordnet ist.

6. Abrollkolben nach einem der Ansprüche 1 bis 5, bei dem die Stütze (2) im Wesentlichen rohrförmig und mit Absätzen oder Flanschen zur Positionierung ausgebildet ist und in ihrem unteren Bereich einen mit Gewinde versehenen Einsatz (17) aufweist.

7. Abrollkolben nach Anspruch 6, bei dem die Verbindung des Kolbenunterteils (5) mit dem Fahrwerk über die Stütze (2) bzw. über den mit Gewinde versehenen Einsatz (17) erfolgt.

8. Abrollkolben nach einem der Ansprüche 1 bis 7, bei dem die Stütze Rollbalgseitig mit einem Teller (16) zur Aufnahme des Anschlagpuffers (3) versehen ist.

9. Luftfedereinrichtung für ein Fahrzeug mit einem Abrollkolben nach einem der Ansprüche 1 bis 8.

## Claims

1. Rolling piston (1) composed of plastic for an air spring U-type bellows, wherein the rolling piston is designed as a plunger piston and has a preferably centrally arranged support (2) for a stop buffer (3) acting in an axial direction of the air spring, wherein
- the support (2) is composed of a material which has a significantly higher strength than the plastic of the rolling piston (1), preferably being composed of steel and wherein
- the support (2) can be received in a recess (4, 8, 9) in the rolling piston (1), said recess being of complementary design to the shape of the support, and can be connected to said piston, **characterized in that** the plunger piston is designed to be hollow and consists of a pot-shaped piston bottom part (5) and a piston top part (6) connected airtightly to the piston bottom part and designed as a cover and the interior (7) of which is connected to the interior of the air spring, having the following features:
- a part (8) of the recess (4) of complementary design to the shape of the support is designed as part of the piston top part (6) and so as to extend in the direction of the piston bottom part,
- the other part (9) of the recess (4) is designed as part of the pot-shaped piston bottom part (5) and so as to extend in the direction of the piston top part, starting from the base of said bottom part,
wherein both parts (8, 9) of the recess adjoin one another and interact to receive the support (2).

2. Rolling piston according to Claim 1, in which the support (2) and the recess (4, 8, 9) are of complementary cylindrical or tubular design and are arranged centrally within the rolling piston (1) .

3. Rolling piston according to Claim 2, in which the interior of the rolling piston is reinforced with rib-type reinforcing elements (10, 11, 12).

4. Rolling piston according to one of Claims 1 to 3, in which the airtight connection (13) between the piston bottom part (5) and the piston top part (6) is formed at the outer piston shell, while the parts of the recess merely rest (14) one against the other.

5. Rolling piston according to Claim 4, in which a seal (15) is arranged between that part of the recess (9) which belongs to the piston bottom part (5) and the support (2).

6. Rolling piston according to one of Claims 1 to 5, in which the support (2) is of substantially tubular design and is formed with offsets or flanges for positioning and, in its lower region, has an insert (17) provided with a thread.

7. Rolling piston according to Claim 6, in which the piston bottom part (5) is connected to the running gear via the support (2) or via the insert (17) provided with a thread.

8. Rolling piston according to one of Claims 1 to 7, in which the support is provided with a dished plate (16) on the U-type bellows side in order to receive the stop buffer (3).

9. Air spring device for a vehicle having a rolling piston according to one of Claims 1 to 8.

## Revendications

1. Piston roulant (1) en matière plastique pour un soufflet à ressort pneumatique, dans lequel le piston roulant est formé par un piston plongeur et présente un soutien (2) disposé de préférence au centre pour un tampon de butée (3) agissant dans la direction axiale du ressort pneumatique, dans lequel
- le soutien (2) se compose d'un matériau, qui présente une résistance sensiblement plus élevée que la matière plastique du piston roulant (1), de préférence d'acier, et dans lequel
- le soutien (2) peut être logé dans un évidement (4, 8, 9) du piston roulant (1) de forme complémentaire à la forme du soutien et peut être assemblé à ce dernier,
**caractérisé en ce que** le piston plongeur est creux et se compose d'une partie inférieure de piston (5) en forme de godet et d'une partie supérieure de piston (6) assemblée de façon étanche à l'air à la partie inférieure de piston et réalisée en forme de couvercle et dont l'espace intérieur (7) est en liaison avec l'espace intérieur du ressort pneumatique, avec les caractéristiques suivantes:
- une partie (8) de l'évidement (4) de forme complémentaire à la forme du soutien est réalisée sous la forme d'une partie de la partie supérieure de piston (6) et s'étend en direction de la partie inférieure de piston,
- l'autre partie (9) de l'évidement (4) est réalisée sous la forme d'une partie de la partie inférieure de piston en forme de godet (5) et s'étend à partir du fond de celui-ci en direction de la partie supérieure de piston,
dans lequel les deux parties d'évidement (8, 9) se raccordent l'une à l'autre et coopèrent pour contenir le soutien (2).

2. Piston roulant selon la revendication 1, dans lequel le soutien (2) et l'évidement (4, 8, 9) sont de forme cylindrique ou tubulaire complémentaire et sont disposés en position centrée à l'intérieur du piston roulant (1).

3. Piston roulant selon la revendication 2, dans lequel l'espace intérieur du piston roulant est renforcé par des éléments de renforcement en forme de nervures (10, 11, 12).

4. Piston roulant selon l'une quelconque des revendications 1 à 3, dans lequel l'assemblage étanche à l'air (13) entre la partie inférieure de piston (5) et la partie supérieure de piston (6) est réalisé à l'enveloppe extérieure du piston, tandis que les parties de l'évidement s'appliquent uniquement l'une contre l'autre (14).

5. Piston roulant selon la revendication 4, dans lequel un joint d'étanchéité (15) est disposé entre la partie de l'évidement (9) faisant partie de la partie inférieure de piston (5) et le soutien (2).

6. Piston roulant selon l'une quelconque des revendications 1 à 5, dans lequel le soutien (2) est essentiellement tubulaire et est réalisé avec des épaulements ou des brides pour le positionnement et présente dans sa région inférieure un insert (17) muni d'un filet.

7. Piston roulant selon la revendication 6, dans lequel la liaison de la partie inférieure de piston (5) avec le train roulant est assurée par le soutien (2) ou par l'insert (17) muni d'un filet.

8. Piston roulant selon l'une quelconque des revendications 1 à 7, dans lequel le soutien est muni, du côté du soufflet roulant, d'un plateau (16) destiné à recevoir le tampon de butée (3).

9. Dispositif de ressort pneumatique pour un véhicule avec un piston roulant selon l'une quelconque des revendications 1 à 8.
